# EUROPEAN PATENT APPLICATION

(11) **EP 2 022 737 A1**
(43) Date of publication of application: **11.02.2009**
(21) Application number: 07743050.2
(22) Date of filing: 09.05.2007
(51) Int. Cl.: B65G 61/00, G01N 35/00, G06K 17/00

(54) **FURNITURE MANAGING SYSTEM**

(30) Priority: 26.05.2006 JP 2006147310
(71) Applicant: Olympus Corporation, Tokyo 151-0072 (JP)
(72) Inventor: IMAI, Naoya, Tokyo 151-0072 (JP)
(74) Representative: von Hellfeld, Axel
(86) International application number: PCT/JP2007/059615
(87) International publication number: WO 2007/138827

(57) **Abstract**

Provided is a stock article management system (1) in which a management station manages information about stock articles used by automatic analyzers (10) which are provided in a plurality of facilities (A to N), respectively, through a network (3). Each of the facilities includes an information exchanger (16a) on which stock articles (19) each appended with an RFID tag (19a) are arranged; a first reader/writer (17) which exchanges information about stock articles with the RFID tag appended to the stock articles arranged on the information exchanger; a second reader/writer (12) which exchanges information about the stock articles with the RFID tag appended to the stock articles mounted on the automatic analyzer, and shares the information about the stock articles with the first reader/writer; and a processor (11, 18) which processes the information about the stock articles received by the first and second reader/writer. The management station collectively manages in real time the stock articles in the plurality of facilities.

## Description

### TECHNICAL FIELD

The present invention relates to a stock article management system which manages, through a network, stock articles used by automatic analyzers provided in a plurality of facilities.

### BACKGROUND ART

Automatic analyzers require one reagent corresponding to each measurement item. Biochemical automatic analyzers for analysis of 30 to 50 test items require a large number of reagents to be used, thus complicating stock management. Thus, users of the automatic analyzers always need to manage the stock of the reagents so as not to cause the shortage. An analysis system capable of managing the stock of operation materials or supplies including stock articles has been proposed (see, for example, Patent Document 1).

Patent Document 1: Japanese Patent Application Laid-open No. 2002-32642

### DISCLOSURE OF INVENTION

### PROBLEM TO BE SOLVED BY THE INVENTION

However, the analysis system of Patent Document 1 is for managing the stock on the individual user side, but not for collectively managing the stock for a plurality of users. In addition, in the analysis system of Patent Document 1, since the individual users place an automatic order for the stock, the individual users place single orders for the stock. Thus, the manufacturer side for supplying the stock needs to respond to sudden orders, thus causing a problem of increased burden on the distribution.

The present invention has been made in view of the foregoing. An object thereof is to provide a stock article management system wherein a management station can collectively manage stock articles including reagents and supplies in a plurality of facilities without causing shortages in stock.

### DISCLOSURE OF INVENTION

### PROBLEM TO BE SOLVED BY THE INVENTION

To solve the above-mentioned problems and achieve the object, a stock article management system according to an aspect of the present invention transmits information about stock articles used in automatic analyzers provided in a plurality of facilities, respectively, to a management station through a network. The management station manages the stock articles in the plurality of facilities. Each of the facilities includes an information exchanger on which stock articles each appended with an RFID tag are arranged; a first reader/writer that exchanges, with the RFID tag, information about the stock articles, and is connected to the network, when the stock articles are arranged on the information exchanger; a second reader/writer that is provided in the automatic analyzer, wherein the second reader/writer exchanges, with the RFID tag, information about the stock articles, shares, with the first reader/writer, the information about the stock articles, and is connected to the network, when the stock articles are mounted on the automatic analyzer; and a processor that processes the information about the stock articles received by the first and second reader/writers. The management station collectively manages in real time the stock articles in the plurality of facilities.

In a stock article management system according to an aspect of the present invention, the automatic analyzer includes a display unit which displays management information of the stock articles.

### EFFECT OF THE INVENTION

In the stock article management system according to the present invention, each facility includes an information exchanger on which the stock articles each appended with an RFID tag are arranged; a first reader/writer which exchanges, with the RFID tag, information about the stock articles and is connected to the network when the stock articles are arranged on the information exchanger; a second reader/writer which is provided in the automatic analyzer, exchanges, with the RFID tag, the information about the stock articles, shares the information about the stock articles with the first reader/writer, and is connected to the network when the stock articles are mounted on the automatic analyzer; and a processor which processes the information about the stock articles and received by the first and second reader/writer. Thus, the management station can collectively manage the stock articles including the reagents and supplies in the plurality of facilities without causing shortages in stock, resulting in an effect of reducing a burden on the manufacturer side in the distribution. Besides, in the stock article management system of the present invention, because the reader/writer automatically exchanges the information about the stock articles with the RFID tag appended to the stock articles, the management station can collectively manage stock articles based on the current information in the plurality of facilities in real time. The first reader/writer can arrange an antenna outside or inside of the information exchanger, and thus can appropriately change the arrangement position of the antenna of the first reader/writer, thus, resulting in an effect of increasing the degree of freedom in the design of providing the first reader/writer.

In the stock article management system of an aspect of the present invention, the automatic analyzer includes a display unit that displays management information for the stock articles. Accordingly, it displays the management information for the stock articles in addition to the information about the analysis, thus preventing the occurrence of errors in managing the stock of the stock articles or occurrence of a trouble that wrong stock articles are set in the automatic analyzer.

### BRIEF DESCRIPTION OF DRAWINGS

FIG. 1 is an overall structural diagram showing an example of a stock article management system.
FIG. 2 is a perspective diagram showing the arrangement of a first reader/writer and a reagent box.
FIG. 3 is a perspective diagram showing a first modification of the first reader/writer.
FIG. 4 is a perspective diagram showing a second modification of the first reader/writer.

### EXPLANATIONS OF LETTERS OR NUMERALS

- 1: Stock article management system
- 2: Management station
- 2a: Management unit
- 3: Network
- 4: Agent
- 5: Manufacture section
- 10: Automatic analyzer
- 11: Controller
- 12: Second reader/writer
- 13: Display unit
- 14: Reagent container
- 14a: RFID tag
- 15: Network connector
- 16: Cold storage
- 16a: Mounting stand
- 16b: Sidewall
- 17: First reader/writer
- 17a: Antenna
- 17b: Controller
- 18: Data processor
- 19: Reagent box
- 19a: RFID tag
- 20: Information exchanging table
- A-N: Facility

### BEST MODE FOR CARRYING OUT THE INVENTION

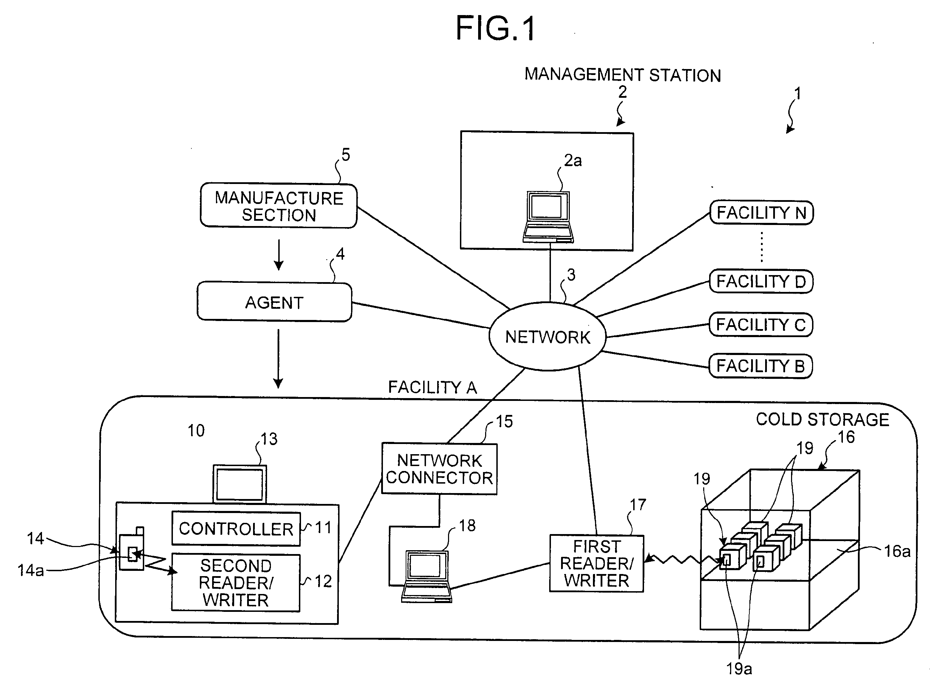

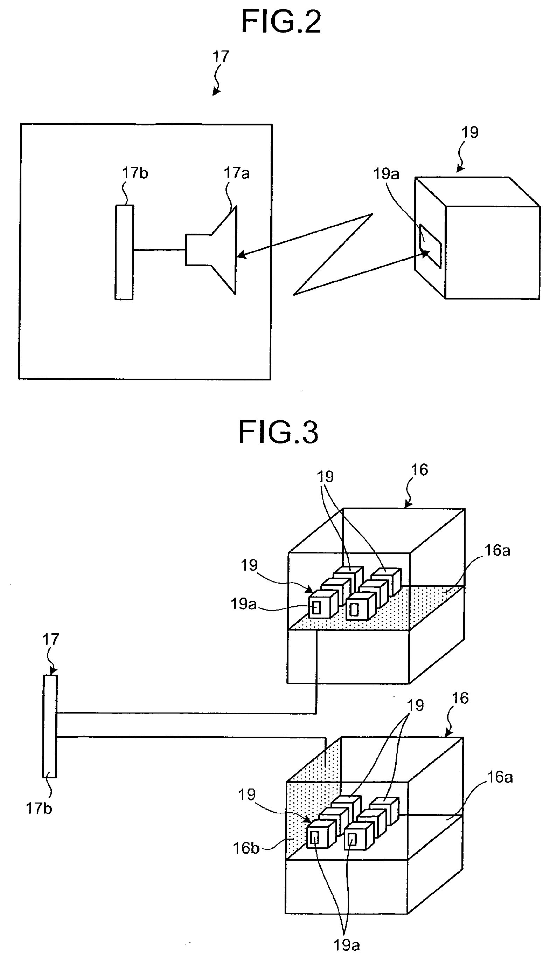

A stock article management system according to a preferred embodiment of the present invention will be explained specifically with reference to the drawings. FIG. 1 is an overall structural diagram showing an example of a stock article management system. FIG. 2 is a perspective diagram showing the arrangement of a first reader/writer and a reagent box. As shown in FIG. 1, in the stock article management system 1, a management station 2 is connected to a plurality of facilities A to N through a network 3.

The management station 2 has a management unit 2a that is a manufacturer side management section, and that collectively manages in real time the stock articles including reagents and supplies of an automatic analyzer in the plurality of facilities A to N on the user side in which the automatic analyzer is installed. The management station 2 places an order to an agent 4 through a network 3 for supplying the stock articles including the reagents and supplies for the facility A, and gives an instruction to a manufacture section 5 through the network 3 for supplying the stock articles for the agent 4. The management unit 2a includes an information terminal, such as a personal computer, workstation or the like.

In this case, the reagents are contained in reagent containers, and a plurality of the reagents are stored in a reagent box. An RFID tag is appended to each of the reagent containers and the reagent box. The consumable supplies include a lamp for analysis used by the automatic analyzer, a disposable chip used by a dispenser.

The network 3 may be any of various networks, such as a public communication line, the Internet, a LAN, a dedicated network or an intranet.

The plurality of facilities A to N have similar configurations. As shown in FIG. 1, the facility A includes an automatic analyzer 10, a network connector 15, a cold storage 16, a first reader/writer 17 and a data processor 18.

The automatic analyzer 10 is a unit for analyzing biological samples, such as blood, includes a controller 11, a second reader/writer 12 and a display unit 13, and is connected to the management unit 2a of the management station 2 through the network connector 15 and the network 3. The controller 11 is a computer for controlling operations of the automatic analyzer 10 and the second reader/writer 12, processing information data regarding the stock articles received by the second reader writer 12, and managing the stock articles used by the automatic analyzer 10. The controller 11 has a non-illustrated CPU and a storage unit. The second reader/writer 12 reads information from an RFID tag 14a appended to a reagent container 14 set in the automatic analyzer 10 under the control of the controller 11 or writes information to the RFID tag 14a. The second reader/writer 12 outputs the information about the reagent container 14 which is read from or written into the RFID tag 14a to the first reader/writer 17, and shares the information about the reagent container 14 with the first reader/writer 17. The display unit 13 displays management information for the stock articles including reagents and supplies, in addition to information about analysis of the operation record including analysis results and the like. In this case, the information recorded in the RFID tag 14a includes a reagent name, the content, the date of manufacture, the expiration date, the delivered date, a remaining amount of agent (usage), a code number of a reagent box 19 as described later, and the like.

The network connector 15 has functions of a network adapter and a router, and, for example, a local router is used.

The cold storage 16 is a refrigerator a part of which keeps and stores the plurality of reagent box 19 at a low temperature, and at least a part of which is formed from glass. As shown in FIG. 1, a plurality of reagent boxes 19 are mounted on a mounting stand 16a as being an information exchanger. Each of the reagent boxes 19 has a plurality of reagent containers 14 (see FIG. 1) contained therein, and an RFID tag 19a is appended onto the surface of the reagent box 19. The information recorded in the RFID tag 19a appended to the reagent box 19 includes a reagent name, the content, the date of manufacture, the expiration date, the delivered date, a remaining amount of agent (usage), a code number of a reagent box 19 and the like.

The first reader/writer 17 uses electric waves at UHF frequencies of a long communication distance. As shown in FIG. 2, the first reader/writer 17 has an antenna 17a for transmitting/receiving electric waves to/from the RFID tag 19a and also a controller 17b, which controls communications with the RFID tag 19a and exchanges protocols between a high rank device and the RFID tag 19a. By transmitting/receiving an electric wave to/from the RFID tag 19a appended onto the reagent box 19 and the RFID tag 14a appended to each of the plurality of reagent containers 14 in the reagent box 19, the first reader/writer 17 can read the information from the RFID tags 14a and 19a, and write the information thereinto. As shown in FIG. 1, the first reader/writer 17 can transmit the read information to the management station 2 directly through the network 3, or can transmit the read information to the management station 2 through the network 3 via the data processor 18 and the network connector 15.

The data processor 18 is for controlling the first reader/writer 17 and the RFID tag 19a and for performing data processing, and may be formed of a personal computer, workstation or the like.

Stock article management by the stock article management system 1 having the above configuration will be explained taking the facility A as an example. First, the reagent to be delivered is contained in the cold storage 16 in the state where it is contained in the reagent box 19. And then, the first reader/writer 17 reads the predetermined information about reagent recorded in the RFID tag 19a appended to the reagent box 19 and in the RFID tag 14a appended onto the plurality of reagent containers 14 in the reagent box 19, and writes the delivered date representing the fact of the delivery into the RFID tags 14a and 19a. Such information is transmitted by the first reader/writer 17 to the management station 2 directly through the network 3. Thus, the management station 2 can collectively and automatically manage in real time the plurality of reagent containers 14 in the reagent box 19 delivered to the facilities A to N. Since the first reader/writer 17 automatically exchanges information with the RFID tags 14a and 19a, users do not need to check each of the plurality of reagent containers 14 in the delivered reagent box 19, thus, resulting in thorough checking of the reagent containers and freeing the users from troublesome checking work.

At this time, when the reagent delivered by the agent 4 differs from that ordered by the management station 2, the management station 2 issues predetermined warning to the facility A through the network 3. Therefore, the stock article management system 1 can properly deal with delivery errors. The first reader/writer 17 may transmit information representing the delivered reagent to the management station 2 through the network 3 via the data processor 18 and the network connector 15.

On the other hand, when the reagent delivered by the agent 4 is the same as that ordered by the management station 2, the management station 2 does not issue warning. In the facility A, the operator of the automatic analyzer 10 takes out the reagent container 14 from a particular reagent box 19 of the plurality of reagent boxes 19, and sets the reagent container 14 in the automatic analyzer 10. Then, on the cold storage 16 side, the first reader/writer 17 reads a code number of the reagent box 19 and the information about the reagent container 14 from the RFID tag 19a appended to the particular reagent box 19 and the RFID tag 14a appended to the taken reagent container 14, and transmits the read information to the management station 2 through the network 3. As described above, the first reader/writer 17 may transmit such information to the management station 2 through the network 3 via the data processor 18 and the network connector 15.

On the automatic analyzer 10 side, after reading of the information recorded in the RFID tag 14a of the reagent container 14 to be taken out as a used reagent container under the control of the controller 11, the second reader/writer 12 reads out information from the RFID tag 14a of the reagent container 14 to be newly set. At this time, if the information read from the RFID tag 14a of the new reagent container 14 does not include information about the delivered date, or if a wrong reagent container is to be set, the second reader/writer 12 issues warning indicating that the reagent is not registered as stock information. This warning can be issued with a warning sound, or can be displayed on the display unit 13. As a result, the stock article management system 1 can make the operator check the reagent containers 14, and can prevent the occurrence of errors in managing the stock and the occurrence of setting a wrong reagent container.

In the automatic analyzer 10 in which the new reagent container 14 is set, the reagents of the plurality of reagent containers 14 are consumed in accordance with various analysis operations. The reagents in the reagent containers 14, for example, are measured every time each analysis operation is completed, and are recorded in the RFID tag 14a of the reagent containers 14. It is transmitted to the management station 2 through the network 3 from the network connector 15 as reagent information. The management station 2 can place an order to the agent 4 through the network 3 for supplying the insufficient reagents based on the reagent information, or can send an instruction to the agent 4 through the network 3 for supplying the insufficient reagents from the manufacture section 5.

As described above, in the stock article management system 1, the management station 2 on the manufacturer side can collectively and automatically manage the plurality of reagents in the facilities A to N without causing shortages in stock, even if the user side does not manage the stock. In addition, in the stock article management system 1, the reader/writer automatically exchanges information about the stock articles between the RFID tags appended to the stock articles. Thus, the management station can collectively manage in real time the stock articles based on the current information of the plurality of facilities. Hence, the stock article management system 1 can supply the plurality of facilities A to N with the stock articles on the initiative of the manufacturer side, thus preventing sudden orders from the user side. This remarkably reduces a burden on the manufacturer side in the distribution.

In the automatic analyzer 10, the controller 11 manages the consumable supplies used by the automatic analyzer 10. For example, when a lamp for analysis lights up over a preset lighting time, or when the number of remaining disposable chips is equal to or less than a predetermined number, such information is transmitted from the network connector 15 to the management station 2 through the network 3. Based on the above information, the management station 2 can place an order to the agent 4 through the network 3 for supplying the facility A with the supplies, or give an instruction to the manufacture section 5 through the network 3 for the agent 4 to supply the facility A with the supplies. As a result, in the stock article management system 1, the management station 2 can collectively and automatically manage the consumable supplies in the facilities A to N without causing shortages in stock, even if the user side does not manage the stock.

Accordingly, because in the stock article management system 1, the management station 2 collectively manages in real time the stock articles including the reagents and consumable supplies in the plurality of facilities A to N through the network 3, the labor hour of the user to manage the stock decreases. The stock article management system 1 can supply the plurality of facilities A to N with the stock articles on the initiative of the manufacturer side, thus preventing sudden orders from the user side. This remarkably reduces a burden on the manufacturer side in the distribution.

When using electric waves at frequencies shorter than UHF frequencies of the short communication distance, the first reader/writer 17, as shown in FIG.3, provides the mounting stand 16a and a sidewall 16b with an antenna (not illustrated) in order to set the mounting stand 16a and the sidewall 16b as information exchangers. As a result, the first reader/writer 17 shortens the distance between the antenna and the RFID tag 19a appended to the reagent box 19 so as to deal with the case of the short communication distance. At this time, the controller 17b is installed outside the cold storage 16, as shown in FIG. 3.

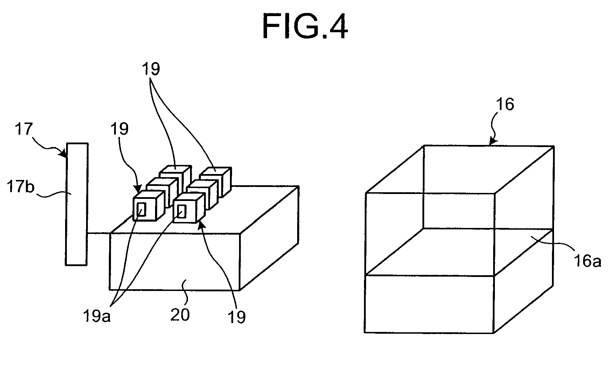

For example, as shown in FIG. 4, an information exchanging table 20 to be an information exchanger may be provided near the cold storage 16. At this time, in the first reader/writer 17 an antenna (not illustrated) is provided on the information exchanging table 20, and the controller 17b is provided on the periphery of the information exchanging table 20. By so doing, the parts management system 1 simply places the delivered stock articles once on the information exchanging table 20, and thus can collectively manage the stock articles including not only the reagents to be contained in the cold storage 16, but also consumable supplies, such as the lamp for analysis, and the disposable chips. Therefore, it hardly takes much time for the user to manage the stock articles. In this case, the information exchanging table 20 is not necessarily in the form of a table.

Further, the agent 4 shares the management information with the management station 2, thereby managing the stock situation of the stock articles in the plurality of facilities A to N and placing an order for supplying the stock articles to the manufacture section 5.

### INDUSTRIAL APPLICABILITY

As described above, the stock article management system according to the present invention is effective for the management station to collectively manage the stock articles including the reagents and consumable supplies in the plurality of facilities without causing shortages in stock, and is particularly suited for the manufacturer as the management station to collectively manage in real time the stock articles including the reagents and consumable supplies.

## Claims

1. A stock article management system which transmits information about stock articles used in automatic analyzers provided in a plurality of facilities, respectively, to a management station through a network, and in which the management station manages the stock articles in the plurality of facilities, each of the facilities comprising:
an information exchanger on which stock articles each appended with an RFID tag are arranged;
a first reader/writer that exchanges, with the RFID tag, information about the stock articles, and is connected to the network, when the stock articles are arranged on the information exchanger;
a second reader/writer that is provided in the automatic analyzer, wherein the second reader/writer exchanges, with the RFID tag, information about the stock articles, shares, with the first reader/writer, the information about the stock articles, and is connected to the network, when the stock articles are mounted on the automatic analyzer; and
a processor that processes the information about the stock articles received by the first and second reader/writers, wherein
the management station collectively manages in real time the stock articles in the plurality of facilities.

2. The stock article management system according to claim 1, wherein
the automatic analyzer includes a display unit which displays management information of the stock articles.
